# EUROPEAN PATENT SPECIFICATION

(11) **EP 0 309 040 B1**
(45) Date of publication and mention of the grant of the patent: **10.02.1993**
(21) Application number: 88202007.6
(22) Date of filing: 15.09.1988
(51) Int. Cl.: F21M 3/10, H01K 1/50

(54) **Headlight lantern system and electric lamp for this system**
Scheinwerferanlage und elektrische Lampe dafür
Système de projecteurs et lampe électrique destinée à un tel système de projecteurs

(30) Priority: 24.09.1987 NL 8702272
(43) Date of publication of application: 29.03.1989
(73) Proprietor: Philips Electronics N.V., 5621 BA Eindhoven (NL)
(72) Inventor: T'Jampens, Germain Remi, NL-5656 AA Eindhoven (NL)
(74) Representative: Rooda, Hans

(56) References cited:
- GB-A- 2 154 726
- US-A- 3 706 005
- US-A- 3 956 659
- US-A- 4 360 861

## Description

The invention relates to a headlight lantern system comprising
at least two pairs of lanterns adapted to be mounted in the front part of an automobile with one lantern of each pair on either side of the centre of this front part, the lanterns of one pair each during operation producing a dipped beam and the lanterns of the other pair each producing a main beam, which lanterns each have a concave flattened reflector having an optical axis and a focus and a quadrangular pane closing the respective reflector, this pane having an average height dimension smaller than 60 mm and an average width dimension, the ratio of the average width dimension to the average height dimension being larger than 3;
a respective electric light source axially arranged in each of the lanterns, this light source having current supply conductors and being surrounded by a translucent envelope filled with gas and sealed onto the current supply conductors. The invention further relates to an electric lamp suitable for use in this headlight lantern system.

Such a headlight lantern system is known from GB-A-2 154 726 (PHN 10.952).

In the known headlight lantern system, high-pressure gas discharge lamps are used as light sources. Such lamps have the advantage over the usual incandescent lamps for cars inclusive of halogen lamps for cars that the light source has a very high degree of brightness. As a result, it is possible to use lanterns having reflectors with a comparatively small concave surface, which becomes manifest in the small height dimension of the lens. Nevertheless, the headlight lantern system satisfies, in accordance with the design of the pane, the requirements imposed in the various countries of the world on the dipped beam and on the main beam.

A great advantage of lanterns having a small height dimension is that the front part of automobiles can be low and hence can have a low air resistance and that the designer of the automobiles has a great freedom.

Disadvantages of the known headlight lantern system are that a comparatively expensive electronic system is required for the ignition and the operation of the gas discharge lamps, that these lamps do not instantaneously emit full light and that they can be reignited only with difficulty when they are still hot.

The invention has for its object to provide a headlight lantern system of the kind mentioned in the opening paragraph, and an electric lamp for this system, which has the advantage of a small height dimension and moreover emits light instantaneously upon excitation of the system.

According to the invention, this object is achieved in a headlight lantern system of the kind mentioned in the opening paragraph in that
- the light source is a filament, which during operation at nominal voltage has a colour temperature of at least approximately 3300 K,
- the envelope of the light source is tubular and has an inner diameter in the range of from approximately 2 to approximately 6 mm,
- the gas filling has a pressure at room temperature in the range of from 8 to 60 bar,
- the gas filling mainly consists of a gas chosen from xenon, krypton and xenon/krypton mixtures containing 2.10⁻⁸ - 12.10⁻⁷ mol of Hal/cm³, Hal being chosen from Br, Cl, Br/Cl mixtures,
- the light source consumes during operation at nominal voltage a power in the range of from 40 to 70 W.

Due to the assembly of coherent features, the system according to the invention is particularly suitable to be incorporated in the front part of a vehicle. It provides the possibility of a very low front part and nevertheless produces excellent light beams for illuminating road parts lying before the vehicle.

Due to the high operating temperature, the light source has a high efficiency of approximately 28 to approximately 33 lm/W. This high efficiency is not decisive for the usability of the light source in the headlight lantern system according to the invention, however. Other light sources having the same or even a higher efficiency can in fact be unserviceable. An example of such a light source may be an incandescent lamp, in which the same high efficiency is obtained in that IR radiation is reflected on the filament by a selective reflector, for example an IR-reflecting interference filter. In such a lamp, electrical energy is saved and hence a high efficiency (lm/W) is obtained due to the fact that thermal losses are suppressed. Such a lamp does not comprise a filament of very high brightness.

A low-pressure discharge lamp having a very high efficiency is not usable either in the headlight lantern system because such a lamp has a low brightness: electrical energy is converted into visible radiation in a comparatively large volume. It is not possible to concentrate the light of a light source of comparatively large volume by means of a comparatively small reflector and a comparatively small lens, if any, in such a manner that the requirements for main and dipped beams are satisfied even on approximation.

The light source of the headlight lantern system according to the invention has a high brightness due to its high temperature. This temperature and this brightness are considerably higher than those of conventional halogen incandescent lamps for cars, such as, for example, H₁ lamps, whose colour temperature is only 3215 K. In general, the colour temperature of the light source in the headlight lantern system according to the invention lies in the range of from 3300 to 3450 K, generally between 3330 and 3430 K.

Due to the high brightness of the light source, i.e. the comparatively large luminous flux from the comparatively small volume of a filament having a diameter of about 0.8 to 1.2 mm, for example 1 mm, and a length of about 4 to 6 mm, the comparatively small concave surface of a comparatively low reflector is capable of throwing a sufficient quantity of light onto the pane to permit the pane of forming a beam therefrom according to the regulations.

It is a surprise to find that not only the lanterns of the headlight lantern system according to the invention are capable of forming, despite their small dimensions, light beams largely exceeding the minimum requirements according to the regulations, but also that the light sources satisfy requirements with respect to their life, i.e. at least 320 hr. It is remarkable that filaments have not yet been brought into connection with headlight lantern systems of very small height. Filaments in fact have as light source of incandescent lamps a history of more than hundred years of proceeding improvement. Automobiles have a history of decades of proceeding streamlining, while especially in the last decade particular emphasis has been laid on the air resistance factor (c_{w}). Apparently, in the various proposals for reduction of the height of lanterns it was not deemed possible to realize a drastic reduction of this height with the use of filaments.

The tubular envelope of the light source can have only one (pinched) seal, in which therefore both current supply conductors to the light source are accommodated. Since within this envelope a current supply conductor has to extend to the end of the light source remote from the seal, the envelope should be comparatively wide and should have an inner diameter of about 4 to 6 mm.
The tubular envelope may alternatively have at both ends a respective (pinched) seal, in which a respective current supply conductor is disposed. Such an envelope has the advantage that the inner diameter can have a lower minimum value of about 2 mm, as a result of which the envelope is capable of withstanding a comparatively very high gas pressure.
The inner diameter in this envelope lies generally in the range of from 2 to 6 mm, mostly in the range of from 2 to 4 mm. The envelope generally has a wall thickness of about 1 to about 2 mm, for example a wall thickness in the range of from 1 to 1.5 mm.

The envelope can consist of glass having an SiO₂ content of at lest 95% by weight, such as quartz glass, or of hard glass, for example hard glass having a linear coefficient of expansion corresponding to that of molybdenum.

The filament generally consumes at nominal voltage, mostly 12 to 13.5 V, a power in the range of from 40 to 70 W. The filament is generally wound to form a single helix. The helix may be surrounded by spun fine wire. As a result, the luminance of the light source is increased. The luminance of the light source is also comparatively high if the helix has a comparatively small pitch/wire ratio, for example in the range of from 1.25 to 1.70.

The light source is generally provided with a lamp cap, which guarantees that the light source is positioned in the relevant lantern with narrow tolerances. The lantern for this purpose has an opening with a boundary thereof and the lamp cap is positioned so as to cooperate with said boundary. The lamp cap has at least one projecting contact element for connection to a connector of an electrical energy source. A second contact of the lamp cap may be a mass contact or a projecting contact element isolated from the mass of the lamp cap.

The contacts of the lamp cap are each connected to a respective current supply conductor to the light source. It is favourable if the current supply conductors are wire-shaped at the areas at which the envelope of the light source is sealed with respect to these conductors. It has been found that such a seal is very capable of withstnding very high gas pressures.

The lamp cap may have at its outer surface a tangential groove for receiving a sealing ring, which seals the connection of the lamp cap with respect to the reflector. The light source intended to form a dipped beam may be integrated with a dipping screen. The dipping screen laterally surrounds the light source over part of its circumference. In a particular embodiment, the dipping screen is situated outside the envelope.

However, it is possible for a dipping screen to be integrated with the lantern, more particularly with the reflector thereof. Alternatively, the dipped beam may be formed, depending upon its specification, without the use of a dipping screen.

In general, the panes of the lanterns have an average height dimension in the range of from 35 to 60 mm and more particularly of from 40 to 50 mm.

In order to make the life of the light sources less dependent upon accidental conditions, such as a high speed of revolution of the motor of the automobile in which the headlight lantern system is incorporated, the system may comprise a power limiter, which limits the power consumed by the light source(s), a current limiter and/or a voltage limiter. The board voltage of a vehicle having a nominal value of 12 V can in fact increase to a much higher value, for example 16 V. Such a proportionally much higher voltage influences the factual life of a filament to a great extent. This is less desirable especially for filaments forming a dipped beam and being used for this reason frequently and for a long time.

An embodiment of the headlight lantern system according to the invention and of the electric lamp suitable to be used therein is shown in the drawing. In the drawing:
Figure 1 is a perspective view of an embodiment of the headlight lantern system mounted in the front part of an automobile;
Figure 2 shows a lantern according to Figure 1 in an axial sectional view with the light source in elevation and a supply circuit;
Figure 3 shows an embodiment of an electric lamp suitable for use in the headlight lantern system as used in Figure 2.

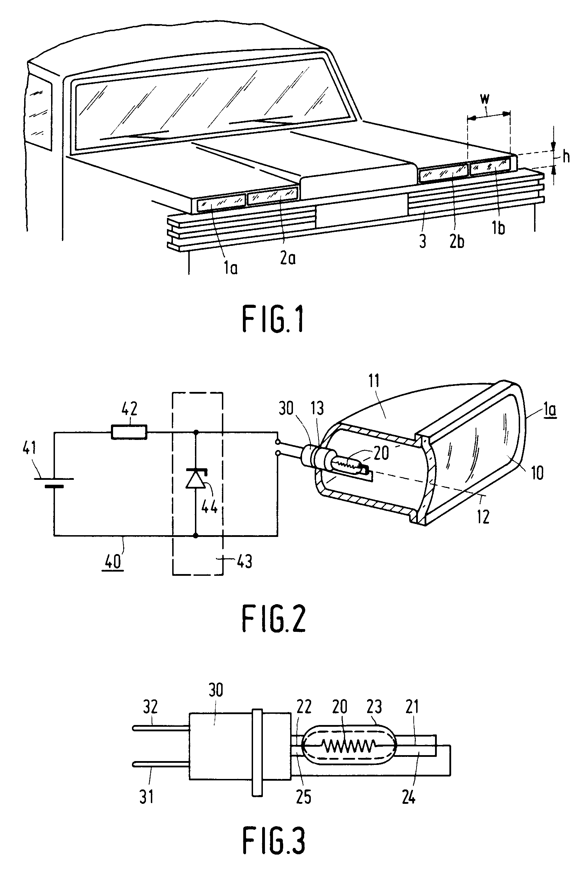

In Figure 1, the headlight lantern system has two pairs of lanterns 1a, 1b and 2a, 2b, respectively, while on either side of the centre of the front part 3 of an automobile one lantern 1a and 2a and 1b and 2b, respectively, of each pair is mounted. In the Figure, only the respective rectangular pane of the lanterns is visible, which has an average height dimension h smaller than 60 mm and an average width dimension w, the ratio w/h being larger than 3.

Like the remaining lanterns 1b, 2a, 2b, the lantern 1a (Figure 2) has a concave flattened reflector 11 having an optical axis 12 and a focus on it, this reflector 11 being closed by the pane 10. Furthermore, an electric light source 20 is axially arranged in the lantern 1a. The lantern 1a is connected in parallel arrangement with the lantern 1b to a supply circuit 40, which comprises a power limiter 43. The light source 20 is included in a first current circuit 41, 42, 20, 41. Reference numeral 42 designates a resistor, which adapts the nominal voltage of the battery 41 to the nominal operating voltage of the light source 20, for example in the case of a battery having a voltage of 13.2 V and a lamp of 12 V 60 W, a resistor of 0.24Ω.

A Zener diode 44 is connected parallel to the light source 20 and this diode becomes conducting if the voltage of the light source exceeds 12 V, as a result of which a current will flow through the circuit 41, 42, 44, 41 and the voltage across the light source 20 and hence the power consumed by said light source are limited. The light source 20 has a lamp cap 30, which is profiled so as to cooperate with the boundary 13 of an opening in the reflector 11.

The light source 20, i.e. an axially arranged filament, has current supply conductors 21, 22 (Figure 3) and is surrounded by a gas-filled translucent envelope 23 sealed onto the current supply conductors 21, 22. The focus of the reflector 11 (Figure 2) lies within the filament 20.

The filament 20 has during operation at the nominal voltage a colour temperature of at least about 3300 K. The envelope 23 is tubular and has an inner diameter in the range of from about 2 to about 6 mm and is filled to a pressure at room temperature in the range of from 8 to 60 bar. The gas filling mainly consists of xenon, krypton or a xenon/krypton mixture containing 2 . 10⁻⁸ to 12 . 10⁻⁷ mol of Hal/cm³, Hal being a halogen chosen from Br, Cl, Br/Cl mixtures. The filament 20 consumes during operation at nominal voltage a power in the range of from 40 to 70 W.

The filament 30 has projecting contact elements 31, 32 for connection to a connector of a supply source. The current supply conductors 21, 22 of the filament 20 are wire-shaped at the areas 24, 25 at the ends of the envelope 23 at which this envelope is sealed onto a respective conductor.

A lamp suitable for use in the headlight lantern system had the following specification:
Quartz glass tubular lamp vessel having an inner diameter of 6 mm and a wall thickness of 1 mm, both current supply conductors extending to the exterior through a seal at one end, a tungsten filament having a length of 4 mm and an outer diameter of 1 mm,
a gas filling at room temperature of 10 bar Xe and 7 mbar CH₂Br₂, i.e. 5.7 . 10⁻⁷ mol of Hal/cm³,
a colour temperature of 3360 K at 12.1 V,
a power of 55.6 W at 12.1 V.

The lamp had a life of 409 hr, an efficiency of 27.9 lm/W and a luminance of 30,000 kcd/m².

The lamp was operated in a flattened parabolic reflector having a rectangular pane of 40 x 132 mm. The focus of the reflector was then situated within the filament. The dipped light beam formed by the lamp with the reflector and the pane was compared with the dipped light beam formed by a conventional 9006 lamp in a conventional LF lantern, whose pane had the dimensions 75 x 135 mm. The lamp had a luminance of 19,000 kcd/m². Both lanterns have been designed to satisfy the standard SAE J 579 c. The results are indicated in Table 1.

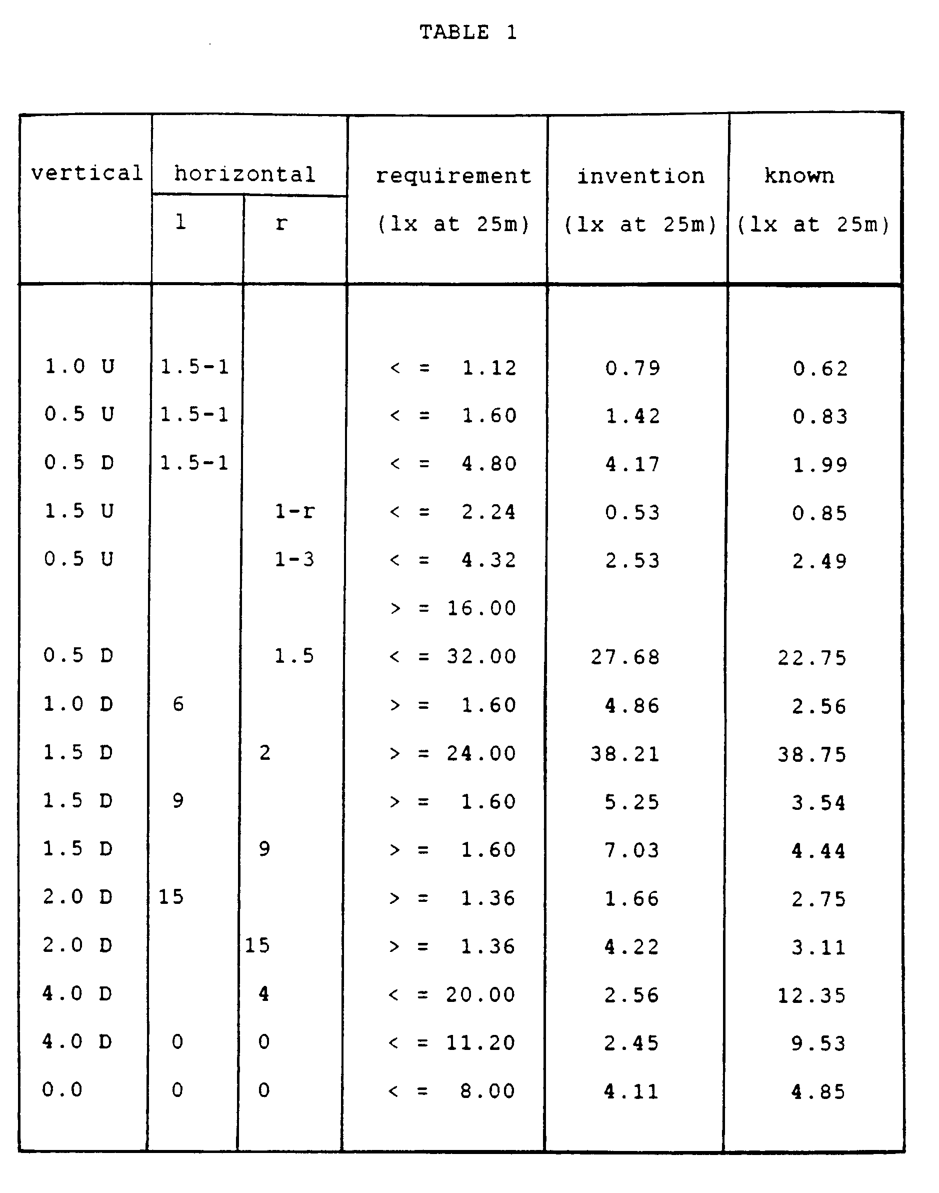

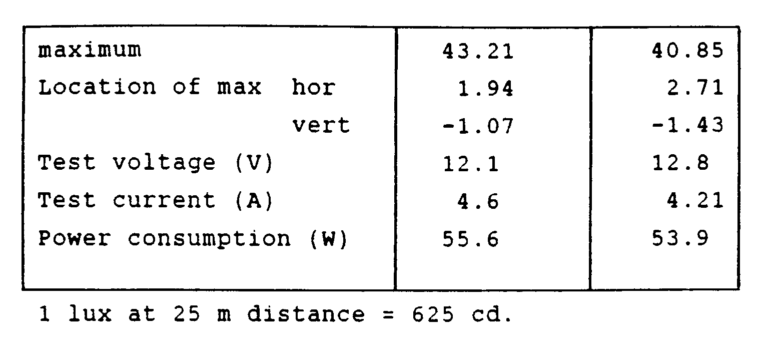

It appears from Table 1 that the headlight lantern system according to the invention amply satisfies the standard in all respects. Although the lantern of the headlight lantern system has a reflector and a pane half the size of those in the known lantern and consumes a comparable power, the beam of the system is superior to what is known in a number of respects. For example, the illumination intensity in the important point 0.5 D, 1.5 r is 21% higher and in the point 2.0 D, 15 r 35% higher, while in the point 1.5 D, 2 r only 2% less is measured. These points determine the illumination intensity of 75 m before the vehicle and the road verge illumination at 30 m before the vehicle. Further, the maximum illumination intensity of the headlight lantern system is 5% higher than that of the known lantern.

## Claims

1. A headlight lantern system comprising
- at least two pairs of lanterns to be mounted in the front part of an automobile with at least one lantern of each pair on either side of the centre of said front part, the lanterns of one pair each producing during operation a dipped beam and the lanterns of the other pair each producing a main beam, which lanterns each have a concave flattened reflector having an optical axis and a focus and each a quadrangular pane closing the respective reflector, which pane has an average height dimension smaller than 60 mm and an average width dimension, the ratio of the average width dimension to the average height dimension being larger than 3,
- a respective electric light source axially arranged in each of the lanterns, which light source has current supply conductors and is surrounded by a gas-filled translucent envelope sealed with respect to the current supply conductors,
characterized in that
- the light source is a filament, which has during operation at nominal voltage a colour temperature of at least about 3300 K,
- the envelope of the light source is tubular having an inner diameter in the range of from about 2 to about 6 mm,
- the gas filling at room temperature has a pressure in the range of from 8 to 60 bar,
- the gas filling mainly consists of a gas chosen from xenon, krypton and xenon/krypton mixtures containing 2.10⁻⁸ - 12 . 10⁻⁷ mol of Hal/cm³, Hal being chosen from Br, Cl, Br/Cl mixtures,
- the light source consumes during operation at nominal voltage a power in the range of from 40 to 70 W.

2. A headlight lantern system as claimed in Claim 1 characterized in that the lanterns each have an opening with a boundary and the light sources each have a lamp cap with at least one projecting contact element for connection to a connector, this lamp cap being profiled so as to cooperate with the boundary of the opening in a respective reflector.

3. A headlight lantern system as claimed in Claim 1 or 2, characterized in that a power limiter is provided at least for the lanterns producing a dipped beam during operation.

4. An electric lamp suitable for use in the headlight lantern system as claimed in Claim 1 comprising a light source in a gas-filled translucent envelope and current supply conductors to the light source, the envelope being sealed onto these current supply conductors, characterized in that
- the light source is a filament, which has during operation at nominal voltage a colour temperature of at least 3300 K,
- the envelope is tubular with an inner diameter in the range of from about 2 to about 6 mm,
- the gas filling has at room temperature a pressure in the range of from 8 to 60 bar,
- the gas filling substantially consists of a gas chosen from xenon/krypton and xenon/krypton mixtures containing 2.10⁻⁸ - 12.10⁻⁷ mol of Hal/cm³, Hal being chosen from Br, Cl, Br/Cl mixtures,
- the light source consumes during operation at nominal voltage a power in the range of from 40 to 70 W.

5. An electric lamp as claimed in Claim 4, characterized in that the lamp has a lamp cap having at least one projecting contact element for connection to a connector, the lamp cap being profiled so as to cooperate with the boundary of an opening in a reflector and the contact element being connected to a current supply conductor.

6. An electric lamp as claimed in Claim 4 or 5, characterized in that the current supply conductors are wire-shaped at the areas at which the envelope is sealed onto these conductors.

7. An electric lamp as claimed in Claim 6, characterized in that the tubular envelope has at both ends a seal accommodating a respective current supply conductor.

## Patentansprüche

1. Scheinwerferanlage mit
- mindestens zwei Scheinwerferpaaren für die Montage in der Vorderfront eines Kraftwagens, wobei an beiden Seiten der Mitte der Vorderfront jeweils ein Scheinwerfer jedes Paares angebracht ist, wobei die Scheinwerfer eines Paares im Betrieb je ein Abblendlichtbündel und die Scheinwerfer des anderen Paares je ein Fernlichtbündel liefern, wobei die Scheinwerfer je einen abgeflachten, konkaven Reflektor mit einer optischen Achse und einem Brennpunkt aufweisen und zum Abschließen des Reflektors mit je einer viereckigen Frontscheibe mit einer mittleren Höhe unter 60 mm und einer mittleren Breite versehen sind, wobei das Verhältnis der mittleren Breite zu der mittleren Höhe größer als 3 ist,
- einer elektrischen Lichtquelle in axialer Anordnung in jedem der Scheinwerfer, wobei die Lichtquelle Stromzuführungsleiter enthält und von einem gasgefüllten, an den Stromzuführungsleitern abgedichteten, lichtdurchlässigen Kolben umgeben ist,
dadurch gekennzeichnet, daß
- die Lichtquelle ein Glühkörper ist, der in Betrieb bei Nennspannung eine Farbtemperatur von mindestens etwa 3300 K hat,
- der Kolben der Lichtquelle rohrförmig ist und einen Innendurchmesser im Bereich zwischen etwa 2 und etwa 6 mm hat,
- die Gasfüllung einen Druck bei Raumtemperatur im Bereich zwischen 8 und 60 bar hat,
- die Gasfüllung im wesentlichen aus einem aus Xenon, Krypton und Xenon/Krypton-Mischungen gewählten Gas besteht, das 2 x 10⁻⁸ bis 12 x 10⁻⁷ Mol Hal/cm³ enthält, wobei Hal aus Br, Cl und Br/Cl-Mischungen gewählt ist,
- die Lichtquelle im Betrieb bei Nennspannung eine Leistung im Bereich zwischen 40 und 70 W aufnimmt.

2. Scheinwerferanlage nach Anspruch 1, dadurch gekennzeichnet, daß die Scheinwerfer je eine Öffnung mit einer Begrenzung enthalten, und die Lichtquellen je einen Sockel mit wenigstens einem herausragenden Kontaktelement zum Anschließen an einen betreffenden Reflektor profiliert ist.

3. Scheinwerferanlage nach Anspruch 1 oder 2, dadurch gekennzeichnet, daß wenigstens für die Scheinwerfer, die im Betrieb Abblendbündel liefern, ein Leistungsbegrenzer vorgesehen ist.

4. Elektrische Lampe geeignet zur Verwendung in der Scheinwerferanlage nach Anspruch 1, mit einer Lichtquelle in einem gasgefüllten, lichtdurchlässigen, Kolben und mit Stromzuführungsleitern zur Lichtquelle, um die der Kolben abgedichtet ist, dadurch gekennzeichnet, daß
- die Lichtquelle ein Glühkörper ist, der im Betrieb bei Nennspannung eine Farbtemperatur von mindestens 3300 K hat,
- der Kolben rohrförmig ist und einen Innendurchmesser im Bereich zwischen etwa 2 und 6 mm hat,
- die Gasfüllung bei Raumtemperatur einen Druck im Bereich zwischen 8 und 60 Bar hat,
- die Gasfüllung im wesentlichen aus einem aus Xenon, Krypton und Xenon/Krypton-Mischungen gewählten Gas besteht, und das 2 x 10⁻⁸ bis 12 x 10⁻⁷ Mol Hal/cm³ enthält, wobei Hal aus Br, Cl und Br/Cl-Mischungen gewählt ist, und
- die Lichtquelle im Betrieb bei Nennspannung eine Leistung im Bereich zwischen 40 und 70 W aufnimmt.

5. Elektrische Lampe nach Anspruch 4, dadurch gekennzeichnet, daß die Lampe einen Sockel mit wenigstens einem herausragenden Kontaktelement zum Anschließen an einen Anschluß enthält, wobei der Sockel zum Zusammenarbeiten mit der Begrenzung einer Öffnung in einem Reflektor profiliert ist, und das Kontaktelement mit einem Stromzuführungsleiter verbunden ist.

6. Elektrische Lampe nach Anspruch 4 oder 5, dadurch gekennzeichnet, daß die Stromzuführungsleiter an der Stelle der Abdichtung des Kolbens um diese Leiter drahtförmig sind.

7. Elektrische Lampe nach Anspruch 6, dadurch gekennzeichnet, daß der rohrförmige Kolben an beiden Enden eine Abdichtung mit einem betreffenden Stromzuführungsleiter enthält.

## Revendications

1. Système de projecteurs comportant:
- au moins deux paires de projecteurs destinés à être montés dans la partie avant d'une automobile, un projecteur de chaque paire de projecteurs étant monté des deux côtés du centre de la partie avant, les projecteurs d'une paire de projecteurs produisant, lors de leur fonctionnement, chacun un faisceau de croisement et les projecteurs de l'autre paire produisant chacun un faisceau de route, projecteurs qui sont chacun munis d'un réflecteur aplati concave présentant un axe optique et un foyer, ainsi que d'une lentille quadrangulaire fermant le réflecteur correspondant, cette lentille ayant une dimension moyenne en hauteur inférieure à 60 mm et une dimension moyenne en largeur, le rapport entre les dimensions moyennes en largeur et en hauteur étant supérieur à 3;
- une source lumineuse électrique correspondante disposée axialement dans chacun des projecteurs, cette source lumineuse présentant des conducteurs d'alimentation de courant et étant entourée d'une enveloppe transmettant la lumière, remplie de gaz et fermée là où sont noyés lesdits conducteurs d'alimentation de courant,
caractérisé en ce que
- la source lumineuse est constituée d'un filament présentant au moins une température de couleur de l'ordre de 3300 K lors de son fonctionnement à la tension nominale,
l'enveloppe de la source lumineuse est tubulaire et qu'elle présente un diamètre intérieur situé dans la gamme comprise entre 2 et 6 mm,
- le remplissage de gaz présente une pression située dans la gamme comprise entre 8 et 60 bars à la température ambiante,
- le remplissage de gaz est principalement constitué d'un gaz choisi parmi le xénon, le krypton et des mélanges de xénon et de krypton contenant de 2.10⁻⁸ à 12 . 10⁻⁷ en mole de Hal/cm³, le Hal étant choisi parmi le Br, le Cl, des mélanges de Br et de Cl,
- la source lumineuse consomme une puissance située dans la gamme comprise entre 40 et 70 W lors de son fonctionnement à la tension nominale.

2. Système de projecteurs selon la revendication 1, caractérisé en ce que chacun des projecteurs présente une ouverture munie d'une délimitation et en ce que chacune des sources lumineuses présente un culot de lampe munie au moins d'un élément de contact en saillie destiné à être relié à un connecteur, ledit culot de lampe étant profilé de manière à coopérer avec la délimitation de l'ouverture d'un réflecteur correspondant.

3. Système de projecteurs selon la revendication 1 ou 2, caractérisé en ce qu'il est prévu un limiteur de puissance au moins pour les projecteurs émettant, en état allumé, un faisceau de croisement.

4. Lampe électrique qui convient à être utilisée dans le système de projecteurs conforme à la revendication 1, comportant une source lumineuse disposée dans une enveloppe transmettant la lumière, remplie de gaz, ainsi que des conducteurs d'alimentation de courant s'étendant vers la source lumineuse, l'enveloppe étant fermée là où sont noyés lesdits conducteurs d'alimentation de courant, caractérisée en ce que
- la source lumineuse est constituée d'un filament présentant au moins une température de couleur de l'ordre de 3300 K lors de son fonctionnement à la tension nominale,
l'enveloppe de la source lumineuse est tubulaire et qu'elle présente un diamètre intérieur situé dans la gamme comprise entre 2 et 6 mm,
- le remplissage de gaz présente une pression située dans la gamme comprise entre 8 et 60 bars à la température ambiante,
- le remplissage de gaz est principalement constitué d'un gaz choisi parmi le xénon, le krypton et des mélanges de xénon et de krypton contenant de 2.10 ⁻⁸ à 12.10⁻⁷ en mole de Hal/cm³, le Hal étant choisi parmi le Br, le Cl, des mélanges de Br et de Cl,
- la source lumineuse consomme une puissance située dans la gamme comprise entre 40 et 70 W lors de son fonctionnement à la tension nominale.

5. Lampe électrique selon la revendication 4, caractérisée en ce que la lampe est munie d'un culot comportant au moins un élément de contact en saillie destiné à être relié à un connecteur, ledit culot de lampe étant profilé de manière à coopérer avec la délimitation de l'ouverture d'un réflecteur correspondant et en ce que l'élément de contact est relié à un conducteur d'alimentation de courant.

6. Lampe électrique selon la revendication 4 ou 5, caractérisée en ce que les conducteurs d'alimentation de courant sont en forme de fil là où ces conducteurs sont noyés dans l'enveloppe.

7. Lampe électrique selon la revendication 6, caractérisée en ce que les deux extrémités de l'enveloppe tubulaire présentent une fermeture dans laquelle est noyé un conducteur d'alimentation de courant correspondant.
